# EUROPEAN PATENT APPLICATION

(11) **EP 4 625 907 A1**
(43) Date of publication of application: **01.10.2025**
(21) Application number: 22967633.3
(22) Date of filing: 09.12.2022
(51) Int. Cl.: H04L 27/00

(54) **COMMUNICATION METHOD AND APPARATUS**

(71) Applicant: Huawei Technologies Co., Ltd., Shenzhen, Guangdong 518129 (CN)
(72) Inventor: HAN, Xi, Shenzhen, Guangdong 518129 (CN); ZHOU, Guangjian, Shenzhen, Guangdong 518129 (CN)
(74) Representative: Maiwald GmbH
(86) International application number: PCT/CN2022/137956
(87) International publication number: WO 2024/119485

(57) **Abstract**

This application relates to the field of communication technologies, and discloses a communication method and apparatus. The method includes: A first communication apparatus receives capability information, where the capability information indicates that a second communication apparatus supports encrypting/decrypting a first message. Then, the first communication apparatus encrypts the first message to obtain a second message, and sends the second message and a first timestamp, where the first timestamp indicates sending time of the second message. According to the foregoing method, the first communication apparatus sends an encrypted message (that is, the second message) and the first timestamp to the second communication apparatus, so that encrypted transmission can be performed on a message (for example, a clock synchronization message) that needs to be stamped, thereby improving security of the message transmission.

## Description

### TECHNICAL FIELD

This application relates to the field of communication technologies, and in particular, to a communication method and apparatus.

### BACKGROUND

In fronthaul networking, clock synchronization may be performed between a radio equipment control (radio equipment control, REC) and a radio equipment (radio equipment, RE) according to a clock synchronization protocol. For example, clock synchronization is performed according to a precision time protocol (precision time protocol, PTP) and a synchronous Ethernet (synchronization ethernet, syncE) protocol, where PTP may also be referred to as the IEEE 1588 protocol. How to perform clock synchronization effectively is a technical problem worth studying.

### SUMMARY

This application provides a communication method, to encrypt/decrypt a message, thereby improving security of message transmission.

According to a first aspect, an embodiment of this application provides a communication method, and the method may be applied to a first communication apparatus. For example, the method may be performed by the first communication apparatus, or may be performed by a module that may be used in the first communication apparatus. The module may be a software module, a hardware circuit, a chip, or a combination of a software module and a hardware circuit or a chip. In the method, a first message is encrypted to obtain a second message; and the second message and a first timestamp are sent, where the first timestamp indicates sending time of the second message.

According to the foregoing method, the first communication apparatus sends the second message and the first timestamp to a second communication apparatus, so that encrypted transmission can be performed on a message (for example, a clock synchronization message) that needs to be stamped, thereby improving security of the message transmission.

In a possible design, a type of the first message is a first type (that is, the first message is a first-type message).

In a possible design, the method further includes: obtaining the type of the first message; and after determining that the type of the first message is the first type, stamping the first message to obtain the first timestamp.

In a possible design, the method further includes: encrypting a third message to obtain a fourth message; and sending the fourth message, where a type of the third message is a second type (that is, the third message is a second-type message).

In a possible design, the first-type message is a message that needs to be stamped, and the second-type message is a message that does not need to be stamped. That a message needs to be stamped may mean that when a message is sent, the message needs to be stamped to obtain a sending timestamp of the message; and/or when a message is received, the message needs to be stamped to obtain a receiving timestamp of the message. Optionally, the first-type message includes but is not limited to at least one of the following: a synchronization message or a delay request message. The second-type message includes but is not limited to at least one of the following: a follow-up message or a delay response message.

In a possible design, the method further includes: sending notification information, where the notification information notifies the second communication apparatus to start to encrypt/decrypt the message.

In a possible design, the method further includes: receiving capability information of the second communication apparatus, where the capability information indicates that the second communication apparatus supports encrypting the message.

In a possible design, the method further includes: sending request information, where the request information is used to request the capability information of the second communication apparatus.

In a possible design, the method further includes: determining that the first communication apparatus supports encrypting/decrypting the message.

According to the foregoing method, the first communication apparatus and the second communication apparatus may negotiate whether encrypting/decrypting the message is supported. When determining that the first communication apparatus supports encrypting/decrypting the message, and the second communication apparatus also supports encrypting/decrypting the message, the first communication apparatus may notify the second communication apparatus to start to encrypt/decrypt the message.

According to a second aspect, an embodiment of this application provides a communication method, and the method may be applied to a second communication apparatus. In the method, the second communication apparatus receives a second message and a first timestamp, where the first timestamp indicates sending time of the second message; and decrypts the second message to obtain a first message.

In a possible design, a type of the first message is a first type.

In a possible design, the method further includes: stamping the second message to obtain a second timestamp, where the second timestamp indicates receiving time of the second message.

In a possible design, the method further includes: receiving a fourth message; and decrypting the fourth message to obtain a third message, where a type of the third message is a second type.

In a possible design, the method further includes: stamping the fourth message to obtain a third timestamp, where the third timestamp indicates receiving time of the fourth message; and discarding the third timestamp after determining that the type of the third message is the second type.

In a possible design, the method further includes: receiving notification information, where the notification information notifies the second communication apparatus to start to encrypt/decrypt a message.

In a possible design, the method further includes: sending capability information, where the capability information indicates that the second communication apparatus supports encrypting/decrypting the message.

In a possible design, the method further includes: receiving request information, where the request information is used to request the capability information of the second communication apparatus.

It may be understood that the method described in the second aspect corresponds to the method described in the first aspect. For beneficial effects of related technical features in the second aspect, refer to the descriptions in the first aspect. Details are not described again.

According to a third aspect, an embodiment of this application provides a communication method, and the method may be applied to a first functional module in a first communication apparatus. In the method, the first functional module in the first communication apparatus sends a first message and indication information of the first message, where the indication information indicates that the first message needs to be stamped; and receives a first timestamp, where the first timestamp indicates sending time of the first message.

In a possible design, a type of the first message is a first type.

In a possible design, the method further includes: sending a third message, where a type of the third message is a second type.

According to a fourth aspect, an embodiment of this application provides a communication method, and the method may be applied to a second functional module in a first communication apparatus. In the method, the second functional module in the first communication apparatus receives a first message and indication information of the first message, where the indication information indicates that the first message needs to be stamped; encrypts the first message to obtain a second message, and sends the second message; and stamps the second message based on the indication information to obtain a first timestamp, and sends the first timestamp, where the first timestamp indicates sending time of the second message.

In a possible design, a type of the first message is a first type.

In a possible design, the method further includes: receiving a third message, encrypting the third message to obtain a fourth message, and sending the fourth message, where a type of the third message is a second type.

According to a fifth aspect, an embodiment of this application provides a communication method, and the method may be applied to a third functional module in a second communication apparatus. In the method, the third functional module in the second communication apparatus receives a second message; stamps the second message to obtain a second timestamp, where the second timestamp indicates receiving time of the second message; decrypts the second message to obtain a first message; and sends the first message and the second timestamp.

In a possible design, the sending the first message and the second timestamp includes: sending the first message and the second timestamp after determining that a type of the first message is a first type.

In a possible design, the method further includes: receiving a fourth message; stamping the fourth message to obtain a third timestamp, where the third timestamp indicates receiving time of the fourth message; decrypting the fourth message to obtain a third message; and sending the third message after determining that a type of the third message is a second type. Optionally, the second timestamp is discarded.

According to the methods in the third aspect to the fifth aspect, from a perspective of a transmitting end of a message, because the first functional module at the transmitting end may send a message and indication information of the message to the second functional module, after encrypting the message, the second functional module may stamp the message based on the indication information. From a perspective of a receiving end of the message, the third functional module may stamp each received message, and after decrypting the message, if an obtained message is a first-type message, sends the message and a timestamp to a fourth functional module. In this way, it can be ensured that the first-type message is marked with a timestamp when the message is encrypted/decrypted, to help implement time synchronization between the first communication apparatus and the second communication apparatus.

According to a sixth aspect, this application provides a communication apparatus. The communication apparatus has functions for implementing the first aspect to the fifth aspect. For example, the communication apparatus includes a corresponding module, unit, or means (means) for performing the operations in the first aspect to the fifth aspect. The module, unit, or means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in the first aspect to the fifth aspect.

In a possible design, the communication apparatus includes a processor, and the processor may be configured to be coupled to a memory. The memory may store a necessary computer program or instructions for implementing the functions in the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In a possible design, the communication apparatus includes a processor and a memory. The memory may store a necessary computer program or instructions for implementing the functions in the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In a possible design, the communication apparatus includes a processor and an interface circuit. The processor is configured to: communicate with another apparatus through the interface circuit, and perform the method in any possible design or implementation in the first aspect to the fifth aspect.

It may be understood that in the sixth aspect, the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are separately disposed. In a specific implementation process, the memory and the processor may be integrated into a same chip, or may be separately disposed on different chips. A type of the memory and a manner of disposing the memory and the processor are not limited in this embodiment of this application.

According to a seventh aspect, this application provides a communication system. The communication system may include a first communication apparatus and a second communication apparatus. The first communication apparatus is configured to perform the communication method provided in the first aspect, the third aspect, or the fourth aspect, and the second communication apparatus is configured to perform the communication method provided in the second aspect or the fifth aspect.

According to an eighth aspect, this application provides a computer-readable storage medium. The computer storage medium stores computer-readable instructions. When a computer reads and executes the computer-readable instructions, the computer is enabled to perform the method in any possible design in the first aspect to the fifth aspect.

According to a ninth aspect, this application provides a computer program product. When a computer reads and executes the computer program product, the computer is enabled to perform the method in any possible design in the first aspect to the fifth aspect.

According to a tenth aspect, this application provides a chip. The chip includes a processor. The processor is coupled to a memory, and is configured to read and execute a software program stored in the memory, to implement the method in any possible design in the first aspect to the fifth aspect.

### BRIEF DESCRIPTION OF DRAWINGS

FIG. 1a is a diagram of a network architecture of fronthaul networking according to an embodiment of this application;
FIG. 1b is a diagram of a CPRI and an eCPRI according to an embodiment of this application;
FIG. 2 is a diagram of a communication system according to an embodiment of this application;
FIG. 3 is a diagram of possible structures of a first communication apparatus and a second communication apparatus according to an embodiment of this application;
FIG. 4 is a schematic flowchart of a possible implementation of clock synchronization according to an embodiment of this application;
FIG. 5 is a schematic flowchart corresponding to a communication method according to an embodiment of this application;
FIG. 6 is a schematic flowchart corresponding to a communication method according to an embodiment of this application;
FIG. 7 is a block diagram of a possible example of an apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

The following describes technical solutions in embodiments of this application with reference to the accompanying drawings in embodiments of this application.

First, some terms in embodiments of this application are described, to help a person skilled in the art have a better understanding.

### (1) Clock synchronization

The clock synchronization may include time synchronization, and optionally, further include frequency synchronization.

Clock synchronization between a network node A and a network node B is used as an example. The time synchronization may mean that at a same moment, time of the network node A is the same as that of the network node B, which is similar to adjusting time of a watch. For example, the time of the network node A is 10:00 a.m. on November 1, 2022, and the time of the network node B is also 10:00 a.m. on November 1, 2022.

The frequency synchronization may mean that a clock of the network node A and a clock of the network node B run at a same frequency. For example, a crystal oscillator frequency of the network node A is the same as a crystal oscillator frequency of the network node B, which is similar to adjusting timing precision of the watch. When the clock of the network node A and the clock of the network node B run at the same frequency, in a same time period, a quantity of counting times of the clock of the network node A is the same as a quantity of counting times of the clock of the network node B, and an increased value of the time of the network node A is the same as an increased value of the time of the network node B. For example, the time of the network node A is increased by 20 seconds (s), and the time of the network node B is also increased by 20s.

For example, when the network node A and the network node B perform clock synchronization according to synchronization protocols such as PTP and a syncE protocol, the network node A and the network node B may perform time synchronization according to PTP, and perform frequency synchronization according to the syncE protocol. The time synchronization and/or the frequency synchronization may alternatively be performed between network nodes according to another protocol. This is not limited. In embodiments of this application, an example in which different network nodes perform clock synchronization according to PTP is used. In this case, the clock synchronization may also be understood as the time synchronization.

### (2) PTP

PTP is a protocol published by the institute of electrical and electronics engineers (institute of electrical and electronics engineers, IEEE) for synchronizing clocks of different network nodes in a clock network. In this protocol, a specific PTP message transmitted between two network nodes in the network is marked with a corresponding timestamp, to measure a delay between the two network nodes, so as to implement clock synchronization between the two network nodes. When the two network nodes perform clock synchronization, a network node whose clock needs to be adjusted is a slave (slave) node, and the other network node is a master (master) node, that is, the slave node adjusts the local clock with reference to a clock of the master node.

For example, the PTP message may include a clock synchronization message and a management message. The clock synchronization message may include a synchronization (sync) message, a follow-up (follow_up) message, a delay request (delay_req) message, a delay response (delay_resp) message, and the like, and may further include another possible message. This is not specifically limited.

A clock synchronization message that needs to be stamped may include the synchronization message and the delay request message, and a clock synchronization message that does not need to be stamped may include the follow-up message and the delay response message. The clock synchronization message that needs to be stamped may also be referred to as an event message (event message), and the clock synchronization message and the management message that do not need to be stamped may also be referred to as general messages (general messages).

### (3) Encryption/Decryption

To ensure security of a communication process, a transmitting end may encrypt a sent message, and correspondingly, a receiving end may decrypt a received message. The decryption is an inverse process of the encryption. For example, the encryption/decryption may be MACsec processing performed according to a media access control security (media access control security, MACsec) protocol, or IPsec processing performed according to an internet protocol security (internet protocol security, IPsec) protocol. In embodiments of this application, an example in which the encryption/decryption is the MACsec processing is used for description. The MACsec protocol integrates security protection into the Ethernet, uses a cryptographic technology to authenticate an origin of data, protects information integrity, and provides replay protection and confidentiality, to ensure that attacks on a layer 2 protocol are reduced. The MACsec processing may be performed at a MAC layer or another layer. In embodiments of this application, an example in which the MACsec processing is performed at the MAC layer is used for description.

For example, when the encryption/decryption is the MACsec processing, the encryption/decryption may be performed according to a media access control security key agreement protocol (media access control security agreement protocol, MKA).

### (4) Fronthaul networking

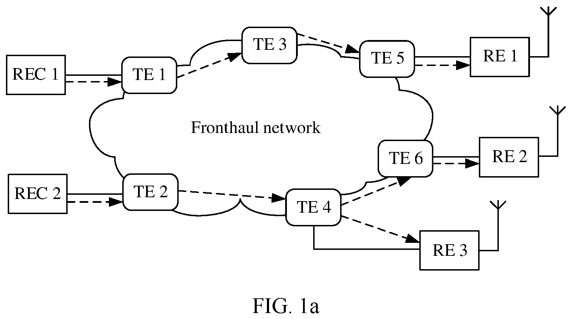

FIG. 1a is a diagram of a network architecture of fronthaul networking according to an embodiment of this application. As shown in FIG. 1a, the network architecture of the fronthaul networking may include at least one REC (for example, an REC 1 and an REC 2 shown in FIG. 1a) and at least one RE (for example, an RE 1, an RE 2, and an RE 3 shown in FIG. 1a), and optionally, further include at least one transmission equipment (transmission equipment, TE) (for example, a TE 1, a TE 2, a TE 3, a TE 4, a TE 5, and a TE 6 shown in FIG. 1a). The REC 1 is configured to control the RE 1, and the REC 2 is configured to control the RE 2 and the RE 3.

The REC 1 and the RE 1 are used as examples. The REC 1 and the RE 1 may be directly connected, that is, there is no other intermediate network element between the REC 1 and the RE 1. In this case, the REC 1 and the RE 1 may perform clock synchronization according to a PTP protocol, where the REC 1 is a master node of the clock synchronization, and the RE 1 is a slave node. Alternatively, the REC 1 and the RE 1 may not be directly connected. For example, the REC 1 and the RE 1 are connected through the TE 1, the TE 3, and the TE 5. In this case, the REC 1 and the TE 1 may perform clock synchronization according to a PTP protocol (the REC 1 is a master node of the clock synchronization, and the TE 1 is a slave node), the TE 1 and the TE 3 may perform clock synchronization according to the PTP protocol (the TE 1 is a master node of the clock synchronization, and the TE 3 is a slave node), the TE 3 and the TE 5 may perform clock synchronization according to the PTP protocol (the TE 3 is a master node of the clock synchronization, and the TE 5 is a slave node), and the TE 5 and the RE 1 may perform clock synchronization according to the PTP protocol (the TE 5 is a master node of the clock synchronization, and the RE 1 is a slave node).

The fronthaul networking in this embodiment of this application may be used in a radio access network (radio access network, RAN). The RAN may be a cellular system related to the 3rd generation partnership project (3rd generation partnership project, 3GPP), for example, a 4th generation (4th generation, 4G) or 5th generation (5th generation, 5G) mobile communication system, or a future-oriented evolved system (for example, a 6th generation (6th generation, 6G) mobile communication system). Alternatively, the RAN may be an open access network (open RAN, O-RAN or ORAN), a cloud radio access network (cloud radio access network, CRAN), or the like. Alternatively, the RAN may be a communication system that integrates the foregoing two or more systems.

The RAN includes a RAN node. The RAN node may also be sometimes referred to as an access network device, a RAN entity, an access node, or the like, and forms a part of the communication system, to help a terminal implement wireless access. When the communication system includes a plurality of RAN nodes, the plurality of RAN nodes may be nodes of a same type, or may be nodes of different types.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in the 6G mobile communication system, a base station in a future mobile communication system, or the like. The RAN node may be a macro base station, a micro base station, an indoor base station, a relay node, a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes cooperate to implement functions of a base station, and different RAN nodes separately implement a part of the functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of the software module and the hardware module.

There is an interface between the DU and the RU. The interface may also be referred to as a fronthaul (fronthaul, FH) interface, and is configured to implement communication between the DU and the RU. Depending on different functions of the DU and the RU and/or different split manners, the interface between the DU and the RU may be a common public radio interface (common public radio interface, CPRI) or an enhanced common public radio interface (enhanced common public radio interface, eCPRI). In a possible implementation, the DU is located in the BBU, the RU is located in the RRU/AAU, and an interface between the BBU and the RRU/AAU may also be referred to as a fronthaul interface. To implement the fronthaul interface, the BBU and the RRU/AAU/RRH, or the DU and the RU may be connected via a fronthaul network. For example, the fronthaul network includes but is not limited to an optical fiber direct connection and a wavelength division multiplexing network.

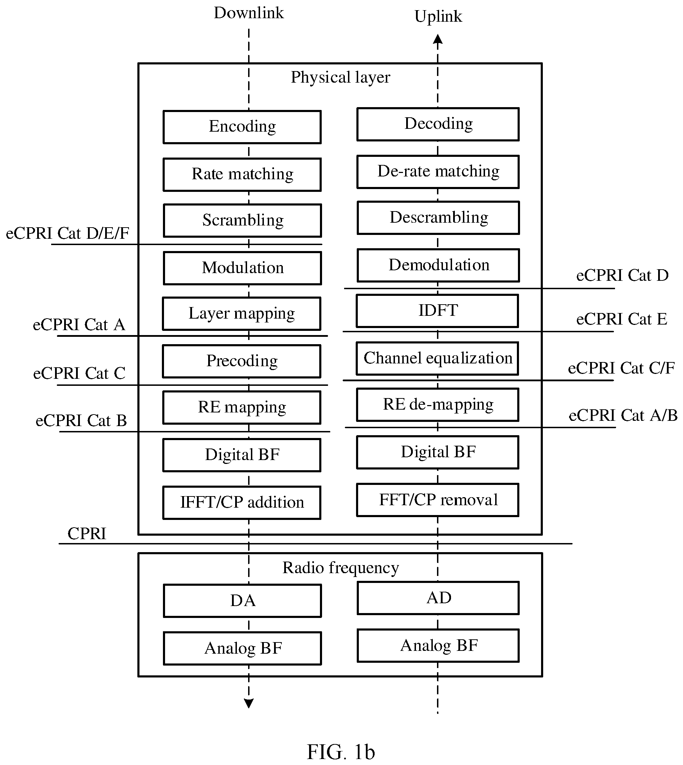

In a possible design, for a CPRI shown in FIG. 1b, for downlink transmission, the DU is configured to implement one or more of the following physical layer baseband functions: encoding, rate matching, scrambling, modulation, layer mapping, precoding, resource element (resource element, RE) mapping, digital beamforming (beamforming, BF), or inverse fast Fourier transformation (inverse fast Fourier transformation, IFFT)/cyclic prefix (cyclic prefix, CP) addition. The RU is configured to implement one or more of the following radio frequency functions: digital-to-analog (digital to analog, DA) conversion or analog BF. For uplink transmission, the DU is configured to implement one or more of the following physical layer baseband functions: decoding, de-rate matching, descrambling, demodulation, inverse discrete Fourier transformation (inverse discrete Fourier transformation, IDFT), channel equalization (or channel estimation), RE de-mapping, digital BF, or fast Fourier transform (fast Fourier transform, FFT)/CP removal. The RU is configured to implement one or more of the following radio frequency functions: analog-to-digital (analog to digital, AD) conversion or analog BF.

In another possible implementation, compared with the CPRI, an eCPRI shown in FIG. 1b moves some of the downlink and/or uplink baseband functions from the DU to the RU for implementation. The interface between the DU and the RU may also be referred to as lower layer split (lower layer split, LLS). In a possible design, the DU is located in the BBU, the RU is located in the RRU/AAU, a processing unit that is configured to implement a baseband function and that is in the BBU is referred to as a baseband high (baseband high, BBH) unit, and a processing unit that is configured to implement a baseband function and that is in the RRU/AAU is referred to as a baseband low (baseband low, BBL) unit.

FIG. 1b shows six possible implementations of the eCPRI. The six implementations are shown as a category (Cat) A to a Cat F in the figure. eCPRIs of different categories may alternatively be described as eCPRIs of different types, different options (options) of the eCPRI, or other possible names. For example, the six eCPRIs in FIG. 1b may also be referred to as six options of the eCPRI. In addition to the eCPRIs shown in FIG. 1b, there may be another type of eCPRI, that is, there is another split manner. This is not limited.

For eCPRI Cat B and Cat C shown in FIG. 1b, splitting on the uplink part and the downlink part by the eCPRIs may be symmetric. For eCPRI Cat A, Cat D, Cat E, and Cat F shown in FIG. 1b, splitting on the uplink part and the downlink part by the eCPRIs may be asymmetric. This is not limited. Optionally, for uplink and/or downlink, different split manners may be configured for different channels or different channel groups, that is, eCPRIs of different types are configured. One group of channels may include one or more channels.

For example, the REC may be a network element or a device having a baseband signal processing function, for example, may be a BBU or a software module, a hardware circuit, or a software module and a hardware circuit in the BBU. Alternatively, the REC may be a DU or a software module, a hardware circuit, or a software module and a hardware circuit in the DU. Optionally, the REC may further have at least one of the following functions: a local and remote operation and maintenance function, a working status monitoring and alarm information reporting function, or the like.

For example, the RE may be a network element or a device having a function of processing a radio signal (for example, an intermediate frequency signal and/or a radio frequency signal), and is also referred to as a radio frequency unit. For example, the RE may be an RRU, an AAU, an RRH, or an RU, or may be a software module, a hardware circuit, or a software module and a hardware circuit in these network elements.

It may be understood that the REC and the RE are names in a common public radio interface (enhanced common public radio interface, CPRI) protocol, and the REC and the RE may have different names in another possible protocol. For example, in an enhanced common public radio interface (enhanced common public radio interface, eCPRI), the REC is referred to as an eREC, and the RE is referred to as an eRE. For another example, in an open radio access network (open radio access network, ORAN) protocol, the REC may be a distributed unit (distributed unit, DU), and the RE may be an RU.

All aspects, embodiments, or features are presented below in this application by describing a communication system that may include a plurality of devices, components, modules, and the like. It should be appreciated and understood that the communication system may include another device, component, module, and the like, and/or may not include all devices, components, modules, and the like discussed with reference to the accompanying drawings. In addition, a combination of these solutions may be used.

The communication system and a service scenario described in embodiments of this application are intended to describe the technical solutions in embodiments of this application more clearly, and do not constitute a limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

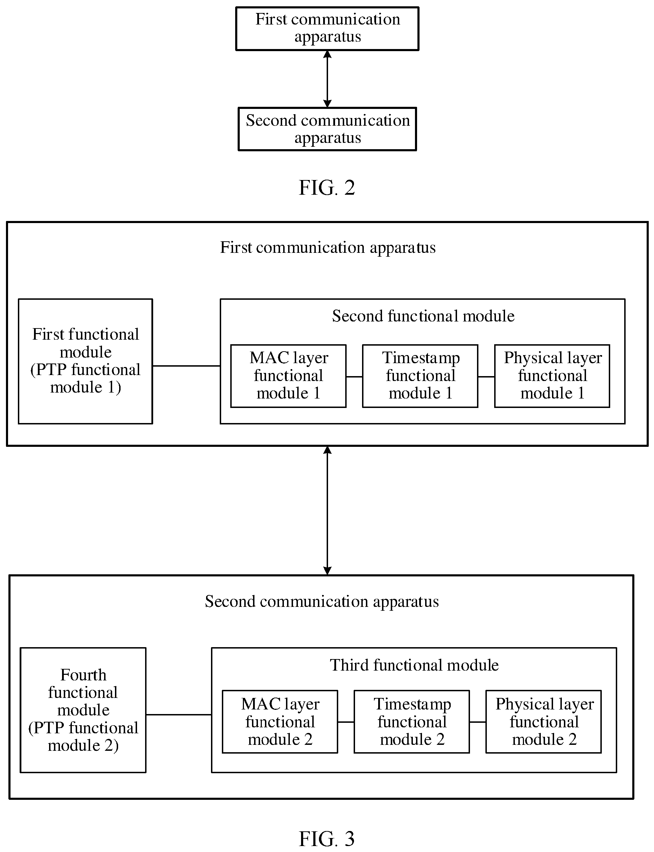

For ease of understanding embodiments of this application, a communication system shown in FIG. 2 is first used as an example to describe in detail a communication system applicable to embodiments of this application. As shown in FIG. 2, the communication system includes a first communication apparatus and a second communication apparatus. The first communication apparatus and the second communication apparatus may perform clock synchronization according to a clock synchronization protocol. In embodiments of this application, an example in which the first communication apparatus and the second communication apparatus perform clock synchronization according to PTP is used.

The first communication apparatus may be a master node, and the second communication apparatus is a slave node; or the first communication apparatus may be a slave node, and the second communication apparatus is a master node. In embodiments of this application, an example in which the first communication apparatus is the master node, and the second communication apparatus is the slave node is used for description.

It may be understood that the communication system shown in FIG. 2 is applicable to a plurality of possible scenarios, for example, applicable to a fronthaul networking scenario. When the communication system is applicable to the fronthaul networking scenario, the first communication apparatus may be an REC, and the second communication apparatus is an RE. For example, the first communication apparatus is an REC 1, the second communication apparatus is an RE 1, and there is no other intermediate network element between the REC 1 and the RE 1. Alternatively, the first communication apparatus may be an REC, and the second communication apparatus is a TE. For example, the first communication apparatus is the REC 1 shown in FIG. 1a, and the second communication apparatus is the TE 1 shown in FIG. 1a. Alternatively, the first communication apparatus may be a TE, and the second communication apparatus is another TE. For example, the first communication apparatus is the TE 1 shown in FIG. 1a, and the second communication apparatus is the TE 3 shown in FIG. 1a. Alternatively, the first communication apparatus may be a TE, and the second communication apparatus is an RE. For example, the first communication apparatus is the TE 5 shown in FIG. 1a, and the second communication apparatus is the RE 1 shown in FIG. 1a.

In addition, that the first communication apparatus communicates with the second communication apparatus in embodiments of this application may mean that the first communication apparatus directly communicates with the second communication apparatus. For example, the first communication apparatus directly sends information 1 to the second communication apparatus, or the second communication apparatus directly sends information 2 to the first communication apparatus. Alternatively, that the first communication apparatus communicates with the second communication apparatus in embodiments of this application may mean that the first communication apparatus communicates with the second communication apparatus via a relay node. For example, the first communication apparatus sends information 1 to the relay node, and after receiving the information 1, the relay node forwards the information 1 to the second communication apparatus.

FIG. 3 is a diagram of possible structures of a first communication apparatus and a second communication apparatus according to an embodiment of this application. As shown in FIG. 3, the first communication apparatus may include a first functional module and a second functional module, and the second communication apparatus may include a third functional module and a fourth functional module.

The first functional module may be a PTP functional module (referred to as a PTP functional module 1 for ease of description), and is configured to implement functions related to a PTP layer, for example, generate a PTP message, and parse the PTP message to obtain information in the PTP message.

The second functional module may be an Ethernet port functional module, and is configured to implement functions related to an Ethernet port. For example, the second functional module may include a MAC layer functional module 1, a timestamp functional module 1, and a physical layer functional module 1. The timestamp functional module 1 may be located between the MAC layer functional module 1 and the physical layer functional module 1. For example, the timestamp functional module 1 may be close to the physical layer functional module 1 (that is, a location at which a timestamp is marked is near a physical layer). In another possible example, the timestamp functional module 1 may alternatively be located in the physical layer functional module 1 (that is, a location at which a timestamp is marked is in a physical layer).

The location at which the timestamp is marked is described as follows: Because in PTP, the timestamp is used to implement clock synchronization between a slave node and a master node, the location at which the timestamp is marked affects accuracy of the clock synchronization. In specific implementation, the timestamp may be marked by using software or hardware. When the timestamp is marked by using the software, a location at which the timestamp is marked is close to an operating system, jitter time is large, and a time offset is within 100 microseconds. When the timestamp is marked by using the hardware, a location at which the timestamp is marked is in or near the physical layer, jitter time is less than the jitter time of marking the timestamp by using the software, and precision may reach a nanosecond level. In embodiments of this application, related implementation is described based on a solution in which the timestamp is marked by using the hardware (that is, the timestamp functional module is close to the physical layer or located in the physical layer).

The MAC layer functional module 1 is configured to implement functions related to a MAC layer, the timestamp functional module 1 is configured to stamp a first-type PTP message, and the physical layer functional module 1 is configured to implement functions related to the physical layer.

For example, when the first communication apparatus is a transmitting end of a message, the MAC layer functional module 1 may perform MAC layer encapsulation on a message received from a higher layer (for example, the PTP layer), and send a message obtained through the encapsulation to the physical layer functional module 1, so that the physical layer functional module 1 sends the message to another communication apparatus (for example, the second communication apparatus). In addition, the timestamp functional module 1 may detect whether the message transmitted from the MAC layer functional module 1 to the physical layer functional module 1 is a first-type message. If the message transmitted from the MAC layer functional module 1 to the physical layer functional module 1 is the first-type message, the timestamp functional module 1 may stamp the message to obtain a sending timestamp of the message, and send the timestamp to the PTP functional module 1.

When the first communication apparatus is a receiving end of a message, after receiving a message from another communication apparatus (for example, the second communication apparatus), the physical layer functional module 1 may transmit the message to the MAC layer functional module 1, so that the MAC layer functional module 1 may perform decapsulation on the message, and send a message obtained through the decapsulation to the PTP functional module 1. In addition, the timestamp functional module 1 may detect whether the message transmitted from the physical layer functional module 1 to the MAC layer functional module 1 is a first-type message. If the message transmitted from the physical layer functional module 1 to the MAC layer functional module 1 is the first-type message, the timestamp functional module 1 may stamp the message to obtain a receiving timestamp of the message, and send the timestamp to the PTP functional module 1.

For the third functional module and the fourth functional module, refer to the descriptions of the first functional module and the second functional module. For example, the third functional module may be an Ethernet port functional module, the third functional module may include a MAC layer functional module 2, a timestamp functional module 2, and a physical layer functional module 2, and the fourth functional module may be a PTP functional module 2. Details are not described again.

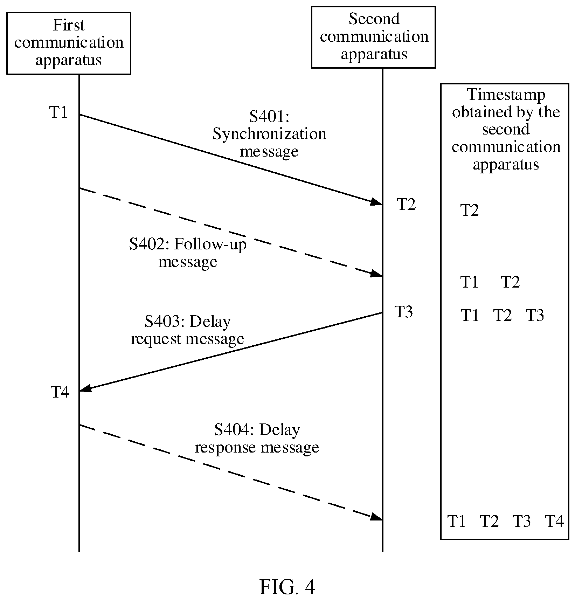

With reference to FIG. 4, the following describes a possible implementation procedure in which a first communication apparatus and a second communication apparatus perform clock synchronization. As shown in FIG. 4, the implementation procedure may include the following steps.

S401: The first communication apparatus sends a synchronization message to the second communication apparatus, and stamps the synchronization message to obtain a timestamp T1, where the timestamp T1 indicates sending time of the synchronization message. Correspondingly, the second communication apparatus receives the synchronization message, and stamps the synchronization message to obtain a timestamp T2, where the timestamp T2 indicates receiving time of the synchronization message.

For example, from a perspective of the first communication apparatus, a PTP functional module 1 generates a synchronization message, and sends the synchronization message to a MAC layer functional module 1. After receiving the synchronization message, the MAC layer functional module 1 performs encapsulation on the synchronization message, and sends a message obtained through the encapsulation to a physical layer functional module 1. In addition, after detecting that the message transmitted from the MAC layer functional module 1 to the physical layer functional module 1 is a synchronization message, a timestamp functional module 1 stamps the synchronization message to obtain the timestamp T1, and sends the timestamp T1 to the PTP functional module 1.

From a perspective of the second communication apparatus, after receiving a message from the first communication apparatus, a physical layer functional module 2 transmits the message to a MAC layer functional module 2, and then the MAC layer functional module 2 performs decapsulation on the message to obtain the synchronization message, and transmits the synchronization message to a PTP functional module 2. After detecting that the message transmitted from the physical layer functional module 2 to the MAC layer functional module 2 is a synchronization message, a timestamp functional module 2 stamps the synchronization message to obtain the timestamp T2, and sends the timestamp T2 to the PTP functional module 2.

S402: The first communication apparatus sends a follow-up message of the synchronization message to the second communication apparatus, where the follow-up message includes the timestamp T1. Correspondingly, after receiving the follow-up message, the second communication apparatus obtains the timestamp T1.

For example, from the perspective of the first communication apparatus, after receiving the timestamp T1 from the timestamp functional module 1, the PTP functional module 1 generates a follow-up message, and sends the follow-up message to the MAC layer functional module 1. After receiving the follow-up message, the MAC layer functional module 1 performs encapsulation on the follow-up message, and sends a message obtained through the encapsulation to the physical layer functional module 1. In addition, after detecting that the message transmitted from the MAC layer functional module 1 to the physical layer functional module 1 is a follow-up message, the timestamp functional module 1 may not perform stamping.

From the perspective of the second communication apparatus, after receiving a message from the first communication apparatus, the physical layer functional module 2 transmits the message to the MAC layer functional module 2, and then the MAC layer functional module 2 performs decapsulation on the message to obtain the follow-up message, and transmits the follow-up message to the PTP functional module 2. In addition, after detecting that the message transmitted from the physical layer functional module 2 to the MAC layer functional module 2 is a follow-up message, the timestamp functional module 2 may not perform stamping.

S403: The second communication apparatus sends a delay request message to the first communication apparatus, and stamps the delay request message to obtain a timestamp T3, where the timestamp T3 indicates sending time of the delay request message.

S404: After receiving the delay request message, the first communication apparatus stamps the delay request message to obtain a timestamp T4, where the timestamp T4 indicates receiving time of the delay request message; and sends a delay response message to the second communication apparatus, where the delay response message includes the timestamp T4.

For example, for specific implementations of S403 and S404, refer to S401 and S402.

Through S401 to S404, the second communication apparatus may obtain the timestamps T1, T2, T3, and T4, and may determine a time difference between the first communication apparatus and the second communication apparatus and a path delay in a transmission process based on the timestamps T1, T2, T3, and T4, to implement the clock synchronization between the first communication apparatus and the second communication apparatus based on the determined time difference and path delay.

It can be learned from the descriptions in FIG. 4 that, in a clock synchronization process, some clock synchronization messages (for example, the synchronization message and the delay request message) need to be stamped. Therefore, to help stamp these clock synchronization messages, transmission of the clock synchronization messages is performed in a plaintext manner. Consequently, a security problem may exist, and accuracy of the clock synchronization between the first communication apparatus and the second communication apparatus is affected. For example, if the synchronization message sent by the first communication apparatus to the second communication apparatus is tampered with, after receiving the follow-up message, the second communication apparatus may fail to accurately determine a synchronization message whose sending time is indicated by the timestamp T1 included in the follow-up message. Consequently, the accuracy of the clock synchronization is affected.

Based on this, an embodiment of this application provides a communication method, to encrypt/decrypt a message that needs to be stamped, thereby improving security of message transmission.

### Embodiment 1

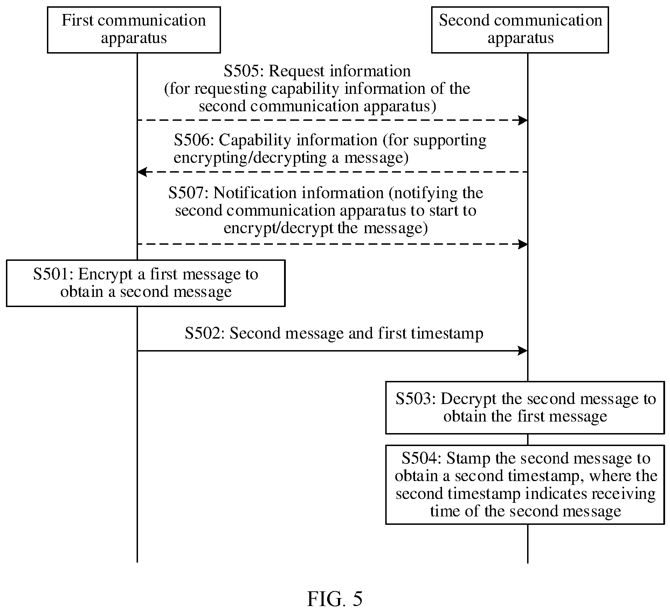

FIG. 5 is a schematic flowchart corresponding to a communication method according to an embodiment of this application. As shown in FIG. 5, the communication method may include the following steps.

S501: A first communication apparatus encrypts a first message to obtain a second message.

The first message herein may be a message that needs to be stamped. For example, the first message may be the foregoing described clock synchronization message (for example, a synchronization message or a delay request message) that needs to be stamped, or may be another message that needs to be stamped. This is not specifically limited. In this embodiment of this application, an example in which the first message is the clock synchronization message that needs to be stamped is used for description.

S502: The first communication apparatus sends the second message and a first timestamp to a second communication apparatus, where the first timestamp indicates sending time of the first message or the second message. Correspondingly, the second communication apparatus receives the second message and the first timestamp.

There may be a plurality of implementations herein in which the first communication apparatus sends the first timestamp to the second communication apparatus. For example, after sending the second message to the second communication apparatus, the first communication apparatus may further send a message to the second communication apparatus, where the message includes the first timestamp. The message may be encrypted or not encrypted. This is not limited.

For example, in this embodiment of this application, messages may be classified into two types: a first type and a second type. A first-type message is a message that needs to be stamped, and a second-type message is a message that does not need to be stamped. A type of the first message is the first type.

When the first message is the clock synchronization message (for example, the synchronization message) that needs to be stamped, the first timestamp may be used for clock synchronization between the first communication apparatus and the second communication apparatus. The first communication apparatus may send the first timestamp to the second communication apparatus by using a follow-up message of the synchronization message.

S503: The second communication apparatus decrypts the second message to obtain the first message.

S504: The second communication apparatus stamps the second message to obtain a second timestamp, where the second timestamp indicates receiving time of the second message.

S504 is an optional step herein. For example, when the first message is the clock synchronization message that needs to be stamped, S504 may be performed; or when the first message is the another message that needs to be stamped, S504 may not be performed.

It may be understood that the foregoing uses an example in which transmission of the first-type message is performed between the first communication apparatus and the second communication apparatus. Transmission of the second-type message may be further performed between the first communication apparatus and the second communication apparatus. For example, the first communication apparatus may encrypt a third message (a type of the third message is the second type) to obtain a fourth message, and send the fourth message (different from the first-type message, a timestamp of the fourth message is not sent) to the second communication apparatus. After receiving the fourth message, the second communication apparatus stamps the fourth message to obtain a third timestamp, where the third timestamp indicates receiving time of the fourth message; decrypts the fourth message to obtain the third message; and discards the third timestamp after determining that the type of the third message is the second type.

In addition, the foregoing is described by using an example in which the first communication apparatus sends a message to the second communication apparatus. That is, the first communication apparatus is a transmitting end of the message, and the second communication apparatus is a receiving end of the message. In another possible embodiment, the second communication apparatus may alternatively send a message to the first communication apparatus. That is, the second communication apparatus is a transmitting end of the message, and the first communication apparatus is a receiving end of the message. For an implementation in which the second communication apparatus sends the message to the first communication apparatus, refer to an implementation in which the first communication apparatus sends the message to the second communication apparatus. Details are not described again.

According to the foregoing method, the first communication apparatus sends the second message and the first timestamp to the second communication apparatus, so that encrypted transmission can be performed on the message that needs to be stamped, thereby improving security of the message transmission.

Optionally, the foregoing method further includes the following steps.

S505: The first communication apparatus sends request information to the second communication apparatus, where the request information is used to request capability information of the second communication apparatus.

For example, the request information may include an identity of a request device (that is, the first communication apparatus) and an encryption/decryption capability request indication. The identity of the first communication apparatus is, for example, a clock identity (Clock Identity) of the first communication apparatus. The encryption/decryption capability request indication indicates that capability information indicating whether the second communication apparatus supports encrypting/decrypting the message is requested.

For example, the first communication apparatus may send a first management message to the second communication apparatus, where the first management message includes the request information. For example, the first management message may include a type-length-value (type, length, value, TLV) type field, a TLV length field, a field of the identity of the request device (which may be denoted as a requestIdentity field), and an encryption/decryption capability request indication field (which may be denoted as a requestMACsecAbility field). The TLV type field indicates a TLV type, and the TLV type may be a TLV type newly introduced in this embodiment of this application. The TLV length field indicates a total quantity of bytes occupied by the field of the identity of the request device and the encryption/decryption capability request indication field. The field of the identity of the request device is used to carry the identity of the request device. The MACsec capability request indication field is used to carry the encryption/decryption capability request indication.

Table 1 shows an example of fields included in the first management message.

**Table 1: Example of fields included in a first management message**

| Field included in the first management message | Quantity of bytes occupied by the field |
|---|---|
| TLV type | 2 |
| TLV length | 2 |
| requestIdentity field | 8 |
| requestMACsecAbility field | 2 |

In this embodiment of this application, the TLV type field indicates a type or a function of a message that carries the TLV type field. For example, in this case, the TLV type field of the first management message indicates that the message is used to request the capability information of the second communication apparatus.

A quantity of bytes occupied by each field in the foregoing Table 1 and the following Table 2 and Table 3 is merely an example, and is not limited in specific implementation.

It may be understood that the first communication apparatus may send the request information to the second communication apparatus when determining that the first communication apparatus supports encrypting/decrypting the message. If the first communication apparatus does not support encrypting/decrypting the message, the first communication apparatus does not need to send the request information to the second communication apparatus, to save transmission resources.

S506: The second communication apparatus sends the capability information to the first communication apparatus based on the request information. Correspondingly, the first communication apparatus receives the capability information from the second communication apparatus, where the capability information indicates whether the second communication apparatus supports encrypting/decrypting the message.

When the capability information indicates that the second communication apparatus supports encrypting/decrypting the message, the message encryption/decryption method in this embodiment of this application may be performed.

For example, the second communication apparatus may send a second management message to the second communication apparatus, where the second management message may include the capability information. For example, the second management message may include a TLV type field, a TLV length field, a field of the identity of the request device, a field of an identity of a response device (which may be denoted as grantIdentity), and a field of a capability of the response device (which may be denoted as a grantMACsecAbility field). For the TLV type field, the TLV length field, and the field of the identity of the request device, refer to the foregoing descriptions. The field of the identity of the response device is used to carry the identity of the response device (that is, the second communication apparatus). The identity of the second communication apparatus is, for example, a clock identity of the second communication apparatus. The field of the capability of the response device is used to carry the capability information. Table 2 shows an example of fields included in the second management message.

**Table 2: Example of fields included in a second management message**

| Field included in the second management message | Quantity of bytes occupied by the field |
|---|---|
| TLV type | 2 |
| TLV length | 2 |
| requestIdentity field | 8 |
| grantIdentity field | 8 |
| grantMACsecAbility field | 2 |

The TLV type field of the second management message indicates that the message is used to report the capability information of the second communication apparatus, that is, the message carries the capability information of the second communication apparatus.

In an example, the grantMACsecAbility field is used as an example. When the grantMACsecAbility field includes two bytes (that is, 16 bits), one of the 16 bits may indicate whether encrypting/decrypting the message is supported (for example, when a value of the bit is 0, it indicates that encrypting/decrypting the message is not supported; or when a value of the bit is 1, it indicates that encrypting/decrypting the message is supported), and the remaining 15 bits may be reserved bits.

It may be understood that S505 is an optional step. In other words, the second communication apparatus may send the capability information to the first communication apparatus based on the request information, or the second communication apparatus may actively send the capability information to the first communication apparatus. This is not specifically limited.

S507: The first communication apparatus sends notification information to the second communication apparatus, where the notification information notifies the second communication apparatus to start to encrypt/decrypt a PTP message. Correspondingly, the second communication apparatus receives the notification information.

For example, the first communication apparatus may send a third management message to the second communication apparatus, where the third management message includes the notification information. For example, the third management message may include a TLV type field, a TLV length field, a field of the identity of the request device, and an encryption/decryption capability field (denoted as a MACsecAbility field). For the TLV type field, the TLV length field, and the field of the identity of the request device, refer to the foregoing descriptions. The MACsec capability field is used to carry the notification information.

Table 3 shows an example of fields included in the third management message.

**Table 3: Example of fields included in a third management message**

| Field included in the second management message | Quantity of bytes occupied by the field |
|---|---|
| TLV type | 2 |
| TLV length | 2 |
| requestIdentity field | 8 |
| MACsecAbility field | 2 |

The TLV type field of the third management message indicates that the message notifies the second communication apparatus to start to encrypt/decrypt the PTP message.

For example, after the second communication apparatus receives the notification information, the first communication apparatus and the second communication apparatus may execute an encryption/decryption negotiation procedure, for example, may calculate an SAK and matching parameter information through negotiation according to an MKA key agreement protocol, to encrypt/decrypt the message. For specific implementation, refer to descriptions in an existing protocol (for example, IEEE 802.1x) or a future evolved version of the existing protocol.

It may be understood that: (1) S505 to S507 are optional steps. For example, with function evolution of a communication apparatus, when all communication apparatuses in a communication system support encrypting/decrypting the message, the first communication apparatus may consider by default that both the first communication apparatus and the second communication apparatus support encrypting/decrypting the message, and therefore S505 to S507 do not need to be performed. In an actual networking scenario, if some communication apparatuses support encrypting/decrypting the message, but some communication apparatuses do not support encrypting/decrypting the message, S505 to S507 may be performed, so that two communication apparatuses that perform transmission of the message first negotiate whether encrypting/decrypting the message is supported. When determining that the first communication apparatus (that is, a master node) supports encrypting/decrypting the message, and the second communication apparatus (that is, a slave node) also supports encrypting/decrypting the message, the first communication apparatus may notify the second communication apparatus to start to encrypt/decrypt the message, so that the first communication apparatus and the second communication apparatus may perform transmission of the message in a ciphertext manner, to improve security of the message transmission.

(2) In this embodiment of this application, an example in which the clock synchronization message is encrypted/decrypted is used for description. If transmission of a management message is performed in a clock synchronization process, the management message may also be encrypted/decrypted, to ensure security. To be specific, the first communication apparatus and the second communication apparatus perform negotiation through S505 to S507 (a management message transmitted in a negotiation process is not encrypted/decrypted). After the negotiation is completed, the first communication apparatus and the second communication apparatus may encrypt/decrypt the PTP message (including the clock synchronization message and the management message) transmitted between the first communication apparatus and the second communication apparatus.

### Embodiment 2

Based on the foregoing descriptions in FIG. 3, in a possible implementation, the first communication apparatus is used as an example. That the first communication apparatus encrypts the message in the embodiment 1 may mean that the MAC layer functional module of the first communication apparatus encrypts a clock synchronization message. In this case, an example in which the first communication apparatus is used as a transmitting end of the message is used. After encrypting the message, the MAC layer functional module of the first communication apparatus transmits an encrypted message to the physical layer functional module, so that the physical layer functional module sends the encrypted message to the second communication apparatus. However, after the message is encrypted, the timestamp functional module cannot identify whether the message is a first-type message. Consequently, whether to stamp the message cannot be determined, and implementation of the stamping is affected.

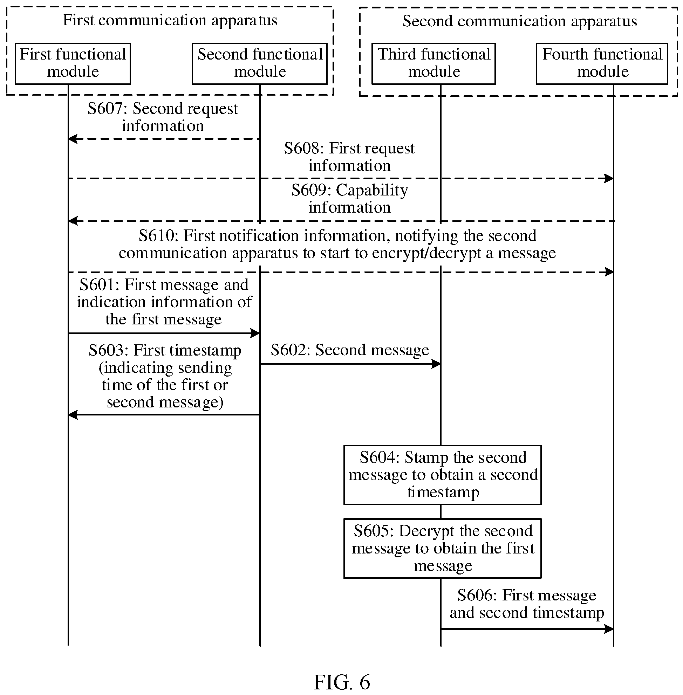

To resolve this problem, the embodiment 2 of this application provides a possible solution. The following provides descriptions with reference to FIG. 6.

FIG. 6 is a schematic flowchart corresponding to a communication method according to an embodiment of this application. As shown in FIG. 6, the communication method may include the following steps.

S601: A first functional module of a first communication apparatus sends a first message and indication information of the first message to a second functional module of the first communication apparatus. Correspondingly, the second functional module receives the first message and the indication information of the first message from the first functional module.

The indication information of the first message herein indicates that the first message needs to be stamped, or indicates that a type of the first message is a first type. For example, the indication information of the first message includes type information of the first message, and the type information indicates that the type of the first message is the first type. Optionally, the indication information of the first message further includes an identity of the first message, and the identity of the first message may be a sequence number of the first message.

It may be understood that, if the first message is a first-type message, the first functional module may send the first message and the indication information of the first message to the second functional module; or if the first message is not a first-type message (for example, the first message is a second-type message or a management message), the first functional module may send the first message to the second functional module, but does not send the indication information of the first message.

S602: The second functional module encrypts the first message to obtain a second message, and sends the second message to a second communication apparatus.

S603: The second functional module stamps the second message based on the indication information to obtain a first timestamp, and sends the first timestamp to a PTP functional module, where the first timestamp indicates sending time of the first message or the second message. Correspondingly, the first functional module receives the first timestamp from the second functional module.

For S602 and S603, a possible implementation is: A MAC layer functional module 1 in the second functional module encrypts the first message to obtain the second message, and sends the second message and the indication information of the first message to a timestamp functional module 1. Correspondingly, after receiving the second message and the indication information of the first message, the timestamp functional module 1 may stamp the second message based on the indication information to obtain the first timestamp, and send the first timestamp to the first functional module. Optionally, if the indication information of the first message includes the identity of the first message, the timestamp functional module 1 may further send the identity of the first message to the first functional module, to help the first functional module determine that the first timestamp indicates the sending time of the first message. In addition, the timestamp functional module 1 sends the second message to a physical layer functional module 1, so that the physical layer functional module 1 sends the second message to the second communication apparatus.

Optionally, after receiving the first timestamp, the first functional module of the first communication apparatus may send the first timestamp to the second communication apparatus.

S604: After the second communication apparatus receives the second message, a third functional module of the second communication apparatus stamps the second message to obtain a second timestamp, where the second timestamp indicates receiving time of the second message.

S605: The third functional module of the second communication apparatus decrypts the second message to obtain the first message.

S606: When the type of the first message is the first type, the third functional module sends the first message and the second timestamp to a fourth functional module of the second communication apparatus.

For S604 to S606, a possible implementation is: A physical layer functional module 2 in the third functional module receives the second message from the first communication apparatus, and sends the second message to a timestamp functional module 2. The timestamp functional module 2 stamps the second message to obtain the second timestamp, and sends the second message and the second timestamp to a MAC layer functional module 2 in the third functional module. After receiving the second message and the second timestamp, the MAC layer functional module 2 decrypts the second message to obtain the first message. Further, the MAC layer functional module 2 may identify whether the type of the first message is the first type. If the type of the first message is the first type, the MAC layer functional module 2 may send the first message and the second timestamp to the fourth functional module.

Optionally, if the MAC layer functional module 2 identifies that the first message is not the first-type message, the MAC layer functional module 2 may send the first message to the fourth functional module, and discard the second timestamp.

In an example, the first message may be a synchronization message, the first timestamp may be the foregoing timestamp T1, and the second timestamp is the foregoing timestamp T2.

Optionally, the foregoing method further includes the following steps.

S607: The second functional module of the first communication apparatus sends second request information to the first functional module, where the second request information is used to request to start to encrypt/decrypt a message. Correspondingly, the first functional module receives the second request information.

S608: The first functional module sends first request information to the second communication apparatus based on the second request information, where the first request information is used to request capability information of the second communication apparatus.

It may be understood that S607 is an optional step. In other words, the first functional module may send the first request information to the second communication apparatus based on the second request information; or the first functional module may actively send the first request information to the second communication apparatus.

S609: The fourth functional module of the second communication apparatus sends the capability information of the second communication apparatus to the first communication apparatus based on the first request information.

S610: The first functional module of the first communication apparatus receives the capability information of the second communication apparatus, and sends first notification information to the second communication apparatus, where the first notification information notifies the second communication apparatus to start to encrypt/decrypt the message.

For example, after receiving the capability information of the second communication apparatus, if determining that both the first communication apparatus and the second communication apparatus support encrypting/decrypting the message, the first functional module of the first communication apparatus may determine to start to encrypt/decrypt the message, and send the first notification information to the fourth functional module of the second communication apparatus. After receiving the first notification information, the fourth functional module may send second notification information to the third functional module, where the second notification information notifies the third functional module to start to encrypt/decrypt the message. Optionally, the first functional module may further send third notification information to the second functional module, where the third notification information notifies the second functional module to start to encrypt/decrypt the message. Then, the second functional module of the first communication apparatus and the third functional module of the second communication apparatus may execute an encryption/decryption negotiation procedure, to subsequently encrypt/decrypt the message.

According to the foregoing method, from a perspective of a transmitting end of a clock synchronization message, because the first functional module at the transmitting end may send a message and indication information of the message to the second functional module, after the MAC functional module in the second functional module encrypts the message, the timestamp functional module in the second functional module may stamp the message based on the indication information. From a perspective of a receiving end of the message, the timestamp functional module in the third functional module may stamp each received message. After decrypting the message, if an obtained message is a first-type message, the MAC functional module in the third functional module sends the message and a timestamp to the fourth functional module. In this way, it can be ensured that the first-type message is marked with a timestamp when the message is encrypted/decrypted, to help implement time synchronization between the first communication apparatus and the second communication apparatus.

For the foregoing embodiment 1 and embodiment 2, it may be understood that:
(1) The foregoing focuses on a difference between the embodiment 1 and the embodiment 2. For content other than the difference, the embodiment 1 and the embodiment 2 may be mutually referenced. In addition, in a same embodiment, different implementations or different examples may also be mutually referenced.
(2) Step numbers of the flowcharts described in the embodiment 1 and the embodiment 2 are merely examples of executing the procedures, and do not constitute a limitation on a sequence of performing the steps. In embodiments of this application, there is no strict execution sequence among steps that do not have a time sequence dependency relationship with each other. Not all the steps shown in the flowcharts are mandatory steps. Some steps may be deleted from the flowcharts according to an actual requirement, or another possible step may be added to the flowcharts according to an actual requirement.

The foregoing mainly describes the solutions provided in embodiments of this application from a perspective of interaction between the first communication apparatus and the second communication apparatus. It may be understood that, to implement the foregoing functions, the first communication apparatus and the second communication apparatus may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

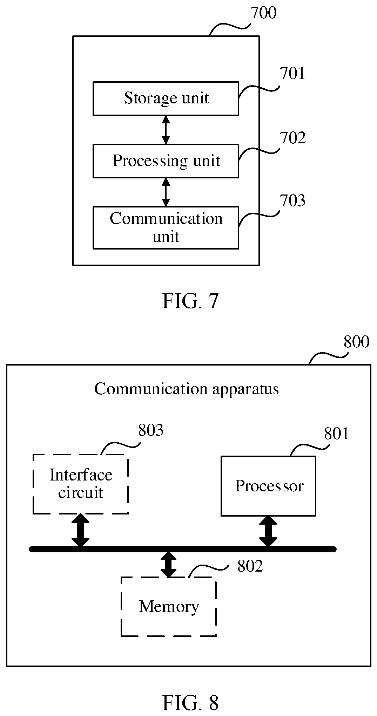

FIG. 7 is a block diagram of a possible example of an apparatus according to an embodiment of this application. As shown in FIG. 7, the apparatus 700 may include a processing unit 702 and a communication unit 703. The processing unit 702 is configured to control and manage an action of the apparatus 700. The communication unit 703 is configured to support communication between the apparatus 700 and another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.

The apparatus 700 may be the first communication apparatus in the foregoing embodiments, or may be a component (for example, a software module, a hardware circuit, a chip, or a combination of a software module and a hardware circuit or a chip) disposed in the first communication apparatus. The processing unit 702 may support the apparatus 700 in performing actions of the first communication apparatus in the foregoing method examples. Alternatively, the processing unit 702 mainly performs internal actions of the first communication apparatus in the method examples, and the communication unit 703 may support the communication between the apparatus 700 and the another device.

For example, in an embodiment, the processing unit 702 is configured to encrypt a first message to obtain a second message; and the communication unit 703 is configured to send the second message and a first timestamp, where the first timestamp indicates sending time of the second message.

The apparatus 700 may be the second communication apparatus in the foregoing embodiments, or may be a component (for example, a software module, a hardware circuit, a chip, or a combination of a software module and a hardware circuit or a chip) disposed in the second communication apparatus. The processing unit 702 may support the apparatus 700 in performing actions of the second communication apparatus in the foregoing method examples. Alternatively, the processing unit 702 mainly performs internal actions of the second communication apparatus in the method examples, and the communication unit 703 may support the communication between the apparatus 700 and the another device.

In an embodiment, the communication unit 703 is configured to receive a second message and a first timestamp, where the first timestamp indicates sending time of the second message; and the processing unit 702 is configured to decrypt the second message to obtain a first message.

It should be understood that division into the units in the apparatus is merely logical function division. During actual implementation, all or some of the units may be integrated into one physical entity or may be physically separated. In addition, all of the units in the apparatus may be implemented in a form of software invoked by a processing element, or may be implemented in a form of hardware; or some of the units may be implemented in a form of software invoked by a processing element, and some of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be independently implemented. The processing element described herein may also be referred to as a processor, and may be an integrated circuit that has a signal processing capability. In an implementation process, the operations in the foregoing methods or the foregoing units may be implemented by using a hardware integrated logic circuit in the processor element or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form of a program scheduled by the processing element, the processing element may be a processor, for example, a general-purpose central processing unit (central processing unit, CPU) or another processor that can invoke the program. For another example, the units may be integrated together and implemented in a form of a system-on-a-chip (system-on-a-chip, SoC).

The foregoing unit configured for receiving is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented by using the chip, the sending unit is an interface circuit that is of the chip and that is configured to send a signal to another chip or apparatus.

FIG. 8 is a diagram of a structure of a communication apparatus according to an embodiment of this application. The communication apparatus is configured to implement operations of the first communication apparatus in the foregoing embodiments.

As shown in FIG. 8, the communication apparatus 800 may include a processor 801, a memory 802, and an interface circuit 803. The processor 801 may be configured to: process a communication protocol and communication data, and control the communication apparatus 800. The memory 802 may be configured to store a program and data, and the processor 801 may perform, based on the program, the method performed by the first communication apparatus in embodiments of this application. The interface circuit 803 may be used by the communication apparatus 800 to communicate with another device, the communication may be wired communication or wireless communication, and the interface circuit may alternatively be replaced with a transceiver.

Alternatively, the memory 802 may be externally connected to the communication apparatus 800. In this case, the communication apparatus 800 may include the interface circuit 803 and the processor 801. Alternatively, the interface circuit 803 may be externally connected to the communication apparatus 800. In this case, the communication apparatus 800 may include the memory 802 and the processor 801. When both the interface circuit 803 and the memory 802 are externally connected to the communication apparatus 800, the communication apparatus 800 may include the processor 801.

The communication apparatus shown in FIG. 8 can implement processes related to the first communication apparatus in the foregoing method embodiments. Operations and/or functions of modules in the communication apparatus shown in FIG. 8 are respectively used to implement corresponding procedures in the foregoing method embodiments. For details, refer to the descriptions in the foregoing method embodiments. To avoid repetition, detailed descriptions are properly omitted herein.

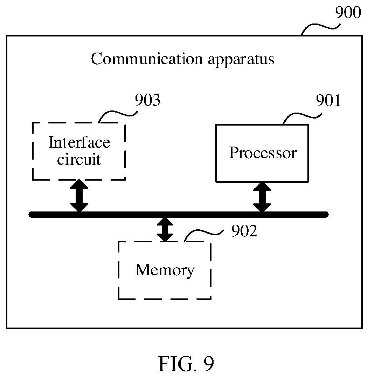

FIG. 9 is a diagram of a structure of a communication apparatus according to an embodiment of this application. The communication apparatus is configured to implement operations of the second communication apparatus in the foregoing embodiments.

As shown in FIG. 9, the communication apparatus 900 may include a processor 901, a memory 902, and an interface circuit 903. The processor 901 may be configured to: process a communication protocol and communication data, and control the communication apparatus 900. The memory 902 may be configured to store a program and data, and the processor 901 may perform, based on the program, the method performed by the second communication apparatus in embodiments of this application. The interface circuit 903 may be used by the communication apparatus 900 to communicate with another device, the communication may be wired communication or wireless communication, and the interface circuit may alternatively be replaced with a transceiver.

Alternatively, the memory 902 may be externally connected to the communication apparatus 900. In this case, the communication apparatus 900 may include the interface circuit 903 and the processor 901. Alternatively, the interface circuit 903 may be externally connected to the communication apparatus 900. In this case, the communication apparatus 900 may include the memory 902 and the processor 901. When both the interface circuit 903 and the memory 902 are externally connected to the communication apparatus 900, the communication apparatus 900 may include the processor 901.

The communication apparatus shown in FIG. 9 can implement processes related to the second communication apparatus in the foregoing method embodiments. Operations and/or functions of modules in the communication apparatus shown in FIG. 9 are respectively used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. Therefore, this application is intended to cover these modifications and variations of this application if they fall within the scope of the claims of this application and equivalent technologies thereof.

## Claims

1. A communication method, wherein the method is applied to a first communication apparatus side, and the method comprises:
receiving capability information, wherein the capability information indicates that a second communication apparatus supports encrypting/decrypting a first message;
encrypting the first message to obtain a second message; and
sending the second message and a first timestamp, wherein the first timestamp indicates sending time of the second message.

2. The method according to claim **1,** wherein a type of the first message is a first type.

3. The method according to claim 2, wherein the method further comprises:
encrypting a third message to obtain a fourth message; and
sending the fourth message, wherein a type of the third message is a second type.

4. The method according to any one of claims 1 to 3, wherein the method further comprises:
sending notification information, wherein the notification information notifies the second communication apparatus to start to encrypt/decrypt a message.

5. The method according to any one of claims 1 to 4, wherein the method further comprises:
sending request information, wherein the request information is used to request the capability information of the second communication apparatus.

6. The method according to any one of claims 1 to 5, wherein the method further comprises:
determining that the first communication apparatus supports encrypting/decrypting the message.

7. A communication method, wherein the method is applied to a second communication apparatus side, and the method comprises:
sending capability information, wherein the capability information indicates that the second communication apparatus supports encrypting/decrypting a first message;
receiving a second message and a first timestamp, wherein the first timestamp indicates sending time of the second message; and
decrypting the second message to obtain the first message.

8. The method according to claim 7, wherein a type of the first message is a first type.

9. The method according to claim 7 or 8, wherein the method further comprises:
stamping the second message to obtain a second timestamp, wherein the second timestamp indicates receiving time of the second message.

10. The method according to any one of claims 7 to 9, wherein the method further comprises:
receiving a fourth message; and
decrypting the fourth message to obtain a third message, wherein a type of the third message is a second type.

11. The method according to claim 10, wherein the method further comprises:
stamping the fourth message to obtain a third timestamp, wherein the third timestamp indicates receiving time of the fourth message; and
discarding the third timestamp after determining that the type of the third message is the second type.

12. The method according to any one of claims 7 to 11, wherein the method further comprises:
receiving notification information, wherein the notification information notifies the second communication apparatus to start to encrypt/decrypt a message.

13. The method according to any one of claims 7 to 12, wherein the method further comprises:
receiving request information, wherein the request information is used to request the capability information of the second communication apparatus.

14. A communication method, wherein the method is applied to a first functional module side in a first communication apparatus, and the method comprises:
sending a first message and indication information of the first message, wherein the indication information indicates that the first message needs to be stamped; and
receiving a first timestamp, wherein the first timestamp indicates sending time of the first message.

15. A communication method, wherein the method is applied to a second functional module in a first communication apparatus, and the method comprises:
receiving a first message and indication information of the first message, wherein the indication information indicates that the first message needs to be stamped;
encrypting the first message to obtain a second message, and sending the second message; and
stamping the second message to obtain a first timestamp, and sending the first timestamp, wherein the first timestamp indicates sending time of the second message.

16. A communication method, wherein the method is applied to a third functional module in a second communication apparatus, and the method comprises:
receiving a second message;
stamping the second message to obtain a second timestamp, wherein the second timestamp indicates receiving time of the second message;
decrypting the second message to obtain a first message; and
sending the first message and the second timestamp.

17. A communication apparatus, comprising a unit configured to implement the method according to any one of claims 1 to 6.

18. A communication apparatus, comprising a processor, wherein the processor is coupled to a memory, and the processor is configured to implement the method according to any one of claims 1 to 6.

19. A communication apparatus, comprising a unit configured to implement the method according to any one of claims 7 to 13.

20. A communication apparatus, comprising a processor, wherein the processor is coupled to a memory, and the processor is configured to implement the method according to any one of claims 7 to 13.

21. A communication system, comprising the communication apparatus according to claim 17 or 18 and the communication apparatus according to claim 19 or 20.

22. A communication apparatus, comprising a unit configured to implement the method according to claim 14.

23. A communication apparatus, comprising a processor, wherein the processor is coupled to a memory, and the processor is configured to implement the method according to claim 14.

24. A communication apparatus, comprising a unit configured to implement the method according to claim 15.

25. A communication apparatus, comprising a processor, wherein the processor is coupled to a memory, and the processor is configured to implement the method according to claim 15.

26. A communication apparatus, comprising a unit configured to implement the method according to claim 16.

27. A communication apparatus, comprising a processor, wherein the processor is coupled to a memory, and the processor is configured to implement the method according to claim 16.

28. A communication system,
comprising the communication apparatus according to claim 22 or 23 and the communication apparatus according to claim 24 or 25; or
comprising the communication apparatus according to claim 22 or 23, the communication apparatus according to claim 24 or 25, and the communication apparatus according to claim 26 or 27.

29. A computer-readable storage medium, wherein the storage medium stores a computer program or instructions, and when the computer program or the instructions are executed by a computer, the method according to any one of claims 1 to 16 is implemented.

30. A computer program product, wherein when a computer reads and executes the computer program product, the computer is enabled to perform the method according to any one of claims 1 to 16.
